# EUROPEAN PATENT SPECIFICATION

(11) **EP 2 264 817 B1**
(45) Date of publication and mention of the grant of the patent: **11.05.2016**
(21) Application number: 09720368.1
(22) Date of filing: 11.03.2009
(51) Int. Cl.: H01M 8/02, H01M 8/10

(54) **FUEL CELL SEPARATOR AND METHOD OF MANUFACTURING THE SAME**
BRENNSTOFFZELLENSEPARATOR UND HERSTELLUNGSVERFAHREN DAFÜR
SÉPARATEUR DE PILE À COMBUSTIBLE ET SON PROCÉDÉ DE FABRICATION

(30) Priority: 14.03.2008 JP 2008066537
(43) Date of publication of application: 22.12.2010
(73) Proprietor: Showa Denko K.K., Tokyo 105-8518 (JP)
(72) Inventor: IINO, Tadashi, Kawasaki-shi Kanagawa 210-0858 (JP); IZUMI, Zenichiro, Kawasaki-shi Kanagawa 210-0858 (JP)
(74) Representative: Strehl Schübel-Hopf & Partner
(86) International application number: PCT/JP2009/055226
(87) International publication number: WO 2009/113717

(56) References cited:
- WO-A1-2007/018185
- JP-A- 11 003 694
- JP-A- 2003 092 097
- JP-A- 2006 019 252
- JP-A- 2006 066 138
- JP-A- 2006 066 138
- JP-A- 2006 066 260
- JP-A- 2006 185 901
- JP-A- 2006 318 717
- JP-A- 2006 318 717
- JP-A- 2006 331 673
- JP-A- 2007 280 674
- US-A1- 2002 127 457
- US-A1- 2003 054 221

## Description

### TECHNICAL FIELD

The present invention relates to a fuel cell separator and a method of producing the same. Particularly, the present invention relates to a lightweight and compact fuel cell separator made of a carbon-containing or carbonaceous material-containing resin, which has superior electroconductivity, gas-supplying and water-draining capability, as well as to a method of producing the same.

### BACKGROUND ART

In recent years, fuel cells have been drawing a lot of attention from the standpoint of environmental issues and energy problems. A fuel cell generates electricity by reverse reaction of water electrolysis, which utilizes hydrogen and oxygen; hence, a fuel cell is a clean electric power generating device without generation of waste other than water.

Fuel cells are classified into several types depending on the type of the respective electrolytes, and the most promising is a solid polymer-type fuel cell utilized in an automobile and general use, since it operates at a low temperature. In general, a solid polymer-type fuel cell comprises single cells as basic unit. The single cell comprises a membrane-electrode assembly (MEA) and separators sandwiching the MEA from the outside. The MEA comprises a solid polymer membrane and a pair of gas diffusion electrodes sandwiching the solid polymer membrane. The solid polymer membrane functions as a solid polymer electrolyte. The gas diffusion electrode supports a catalyst. The separator separates a fuel gas and an oxidative gas. High-output power generation can be achieved by stacking a plurality of single cells.

Provided on the separator surface contacting the MEA is a gas flow path (groove) for supplying a reaction gas to the gas diffusion electrode surface and for carrying away generated gas and excess gas. By using such gas flow path to supply fuel hydrogen to one of the gas diffusion electrodes and an oxidant gas, such as oxygen or air to the other gas diffusion electrode, and by providing an external load circuit to connect both of the gas diffusion electrodes, a device having the aforementioned constitution is made to function as a fuel cell.

Therefore, in addition to excellent gas impermeability to allow complete separation of these gases and a high electroconductivity to decrease the internal resistance, the fuel cell separator is required to have a high thermal conductivity, strength and the like.

In order to satisfy these requirements, metal materials and carbonaceous materials have both been investigated for a fuel cell separator. Although metal materials have a large specific gravity, they have the advantage of excellent mechanical properties to allow fabrication of thin separators and in the high electroconductivity. However, since metal materials are not corrosion resistance, devising a surface treatment and a composition in order to impart an excellent corrosion resistance has been investigated.

Many investigations have also been conducted on carbonaceous materials. Examples of such materials for a fuel cell separator include, a molded article obtained by press-molding an expanded graphite sheet, a molded article obtained by impregnating a resin with a carbon sintered body and subsequently curing the resultant, a glassy carbon obtained by calcinating a thermosetting resin, and a molded article obtained by mixing carbon powder and a resin and subsequently molding the thus obtained mixture.

In the aforementioned fuel cell, water is generated in the following electrochemical reaction:

H₂ → 2H⁺ + 2e⁻ (1)

(1/2)O₂ + 2H⁺ + 2e⁻ → H₂O (2)

H₂ + (1/2)O₂ → H₂O (3)

The above Formulae (1) and (2) represent the reaction at the fuel electrode (anode electrode) and the reaction at the oxidant electrode (cathode electrode), respectively, with the Formula (3) representing the overall reaction. A fuel gas (hydrogen) supplied to the anode side is ionized (H⁺) on the electrode and moves to the cathode side through a polymer electrolyte membrane. Generally, in order to facilitate this fuel gas movement, the fuel gas is supplied in the condition in which the gas contains water vapor.

In addition, moisture (water vapor) is generated by the aforementioned electrochemical reaction. Therefore, the water vapor mixed with the fuel gas and oxidant gas, as well as the moisture (water vapor) generated by the aforementioned electrochemical reaction, pass though the flow path (groove) formed on the separator. The separator surface is generally controlled at a certain temperature in order to avoid excess water condensation; however, the amount of heat generated inside the fuel cell varies depending on a change in the consumption of generated power and the amount of supplied gases, resulting in a shift in the inner temperature and the amount of generated water. When condensation occurs due to such shift, the flow path (groove) is clogged by a water droplet because of large surface tension of water. The reaction, therefore, does not occur smoothly due to a flooding phenomenon which inhibits gas flow, thereby causing the problem of impaired power-generating performance.

In order to control such flooding, it has been attempted to improve the ability to drain the generated water by controlling the wettability of the members constituting the fuel cell. For example, there are disclosed a method of hydrophilizing the very separator material obtained by press-molding the raw material powder prepared by mixing in advance a hydrophilic substance with a carbon material (Japanese Unexamined Patent Publication No. H10-3931); a separator whose surface comprises a hydrophilic resin (Japanese Unexamined Patent Publication No. 2000-251903); a stacked fuel cell comprising a fluorinated graphite coating formed by selectively fluorinating the inner wall of the recess of corrugated reaction gas flow path (Japanese Unexamined Patent Publication No. S59-146168); and a method of imparting hydrophilicity by performing treatments, such as plasma treatment, corona treatment and ultraviolet irradiation, on the surface of separator made of various materials in a hydrophilizing gas (WO 99/40642).

This WO 99/40642 describes that the contact angle at the separator surface measured in the drop method using water is made to 3° to 70° by a hydrophilization treatment; however, similarly, it has been also disclosed to prescribe the contact angle with water not greater than 40° (Japanese Unexamined Patent Publication No. 2000-311695) or to set the contact angle in the range from 80° to 120° (Japanese Unexamined Patent Publication No. 2005-216678). In addition, there are a method of hydrophilizing by subjecting a separator surface to an air-blast treatment (Japanese Unexamined Patent Publication No. 2005-302621) and a method in which the surface roughness attained by a blast treatment is prescribed in order to improve the hydrophilization of the surface by providing irregularities thereonto (Japanese Unexamined Patent Publication No. 2005-197222).

Further, disclosed as a method in which the aforementioned treatments are performed in combination include: a method in which irregularities are formed on the surface of the gas flow path by a blast treatment and a fluorine-containing carbon layer is subsequently formed by a plasma irradiation with a fluorine-containing gas, followed by removal of the thus formed fluorine-containing carbon layer, except from the surface of the gas flow path (Japanese Unexamined Patent Publication No. 2003-123780); and a method in which a prescribed irregular shape is formed on a part of the separator gas flow path, which is then further subjected to a hydrophilization treatment in a hydrophilization gas (Japanese Unexamined Patent Publication No. 2006-66138).
Patent Document 1: Japanese Unexamined Patent Publication No. H10-3931
Patent Document 2: Japanese Unexamined Patent Publication No. 2000-251903
Patent Document 3: Japanese Unexamined Patent Publication No. S59-146168
Patent Document 4: WO 99/40642
Patent Document 5: Japanese Unexamined Patent Publication No. 2000-311695
Patent Document 6: Japanese Unexamined Patent Publication No. 2005-216678
Patent Document 7: Japanese Unexamined Patent Publication No. 2005-302621
Patent Document 8: Japanese Unexamined Patent Publication No. 2005-197222
Patent Document 9: Japanese Unexamined Patent Publication No. 2003-123780
Patent Document 10: Japanese Unexamined Patent Publication No. 2006-66138
JP 2006 318717 A and JP 2006 066138 A disclose methods of producing fuel cell separators having a recessed gas flow path by moulding a composition comprising graphite and a resin. The resistance to water flooding of the gas flow path is improved by rendering the separator surface more hydrophilic by performing a roughening treatment.

### SUMMARY OF INVENTION

### Technical Problem

However, in the aforementioned method according to Japanese Unexamined Patent Publication No. H10-3931, the addition of inorganic and organic fibers carried out for the purpose of improving the hydrophilicity causes the problem of impaired electroconductivity and elution of impurities. In the separator according to Japanese Unexamined Patent Publication No. 2000-251903, since the hydrophilic resin provided on the surface is generally liable to a volume change caused by swelling due to water absorption, the hydrophilic resin may be detached from the substrate. In Japanese Unexamined Patent Publication No. S59-146168, the water-repelling property of the fuel cell is improved by the fluorinated graphite coating. In the treatment according to WO 99/40642, the effect thereof decreases over time. In Japanese Unexamined Patent Publication No. 2000-311695 and Japanese Unexamined Patent Publication No. 2005-216678, the prescribed surface contact angle is measured on a flat plate; however, the evaluation results are different between the recess of the flow path and the flat plate, and a sufficient effect cannot be attained. In Japanese Unexamined Patent Publication No. 2005-302621 and Japanese Unexamined Patent Publication No. 2005-197222, irregularities are formed on the surface for the purpose of hydrophilization; however, this is not sufficient to impart a sufficient hydrophilicity. In Japanese Unexamined Patent Publication No. 2003-123780 and Japanese Unexamined Patent Publication No. 2006-66138, a combination of chemical treatment and formation of irregularities is applied to the surface; however, even this is still not enough to impart a sufficient effect. As the reason for not being able to obtain a good evaluation result, the static contact angle of water at the flat surface of a molded article is evaluated in a conventional evaluation method; however, it is highly likely that such static contact angle does not correspond to the actual fluidity of water; therefore, the establishment of a more appropriate evaluation method is desired. Further, the purpose of the plasma treatment of the surface by a fluorine-containing gas in Japanese Unexamined Patent Publication No. 2003-123780 is water-repellent treatment; therefore, it is different from that of hydrophilization in the present invention.

Therefore, an object of the present invention is to provide a fuel cell separator having superior electroconductivity, gas-supplying and water-draining capability, as well as a method of producing the same.

### Solution to Problem

The present invention includes the following items [1] to [7].
[1] A method of producing a fuel cell separator made of a resin composition comprising a carbonaceous material (A) and a resin (B) containing from 0.5 to 30 % by weight, based on the weight of the separator, of one or more components selected from 1,2-polybutadiene, 3,4-polyisoprene, polyethylene, polypropylene and polybutene-1, the fuel cell separator having a recess for gas flow path on a surface of the separator; comprising the steps of
   roughening a surface of the recess for gas flow path to an arithmetic mean roughness Ra of 0.5 to 10 µm; and
   hydrophilizing the recess for gas flow path; characterized in that the step of hydrophilizing the recess for gas flow path is carried out by immersing the separator in an atmosphere of a fluorine-containing gas.
[2] The method of producing a fuel cell separator according to [1] above, wherein the arithmetic mean roughness Ra of the surface of the recess for gas flow path is 3 to 6 µm.
[3] The method of producing a fuel cell separator according to [1] or [2] above, wherein the step of roughening a surface of the recess for gas flow path is carried out by at least one of blast processing and laser processing.
[4] The method of producing a fuel cell separator according to [1] or [2] above, wherein the surface of the recess for gas flow path is roughened by transferring a roughness of a roughened surface of a mold for molding the separator to the surface of the recess for gas flow path in the step for molding the separator.
[5] A fuel cell separator, made of a resin composition comprising a carbonaceous material (A) and a resin (B) containing from 0.5 to 30 % by weight, based on the weight of the separator, of one or more components selected from 1,2-polybutadiene, 3,4-polyisoprene, polyethylene, polypropylene and polybutene-1, and having a recess for gas flow path on a surface of the separator, wherein a surface of the recess for gas flow path has an arithmetic mean roughness Ra of 0.5 to 10 µm,
   characterized in that the surface of the recess for gas flow path has a total fluorine atom content analyzed by X-ray electron spectroscopy of 2 to 45 percent by atom and a total oxygen atom content analyzed by X-ray electron spectroscopy of 5 to 60 percent by atom, wherein the surface of the separator has been hydrophilised by immersing the separator in an atmosphere of fluorine-containing gas.
[6] The fuel cell separator according to [5] above, wherein the arithmetic mean roughness Ra is 3 to 10 µm.
[7] The fuel cell separator according to [5] or [6] above, the fuel cell separator having a recess for gas flow path on a surface of the separator; wherein the fuel cell separator has a water film retention time of 10 seconds or longer, where the water film retention time is measured by
   immersing the fuel cell separator or a strip-shaped test piece of the fuel cell separator in water at 23 °C having an electroconductivity not greater than 10 µS for 30 seconds;
   pulling it out in the vertical direction from the surface of the water to a position at not less than 1 cm in the air within 1 second;
   measuring a duration in which a uniform water film formed on the surface of the separator is retained by determining the time at which the uniform water film runs out of water, i.e.
   (i) the moment at which the water film is broken, or
   (ii) the moment at which the wet portion is split into two or more, or
   (iii) the moment at which the width of the wet portion or the area of the wet portion is reduced to a half or less; and
   defining the duration as "water film retention time".

### Advantageous Effects of Invention

The fuel cell separator according to the present invention is made of a resin composition comprising a carbonaceous material (A) and a resin (B). Since the fuel cell separator is fabricated in such a manner that the surface of recess for gas flow path has a specific arithmetic mean roughness and the recess surface is hydrophilized by a treatment with a fluorine-containing gas, a flooding phenomenon and a decrease in the energy efficiency can be prevented over a period of the use of fuel cell.

### BRIEF DESCRIPTION OF DRAWINGS

Fig. 1 is schematic cross-sectional views for illustrating the method of evaluating the wettability of the fuel cell separator according to the present invention.
Fig. 2 is photographs showing examples of satisfactory judgment and non-satisfactory judgment in the evaluation of the wettability of the fuel cell separator according to the present invention (examples of the standards in the wettability evaluation).
Fig. 3 is a graph showing one example of the results of the power generation test of the fuel cell separator according to the present invention.
Fig. 4 show graphs of the results of the hysteresis evaluation based on the dynamic contact angle of the fuel cell separator according to the present invention.
Fig. 5 is a graph showing the results of the persistence evaluation of the wettability of the fuel cell separator according to the present invention.

### DESCRIPTION OF EMBODIMENTS

The present invention will now be described more specifically.

### (Method of producing fuel cell separator)

The production method according to the present invention is a method of producing a fuel cell separator made of a resin composition comprising a carbonaceous material (A) and a resin (B), the fuel cell separator having a recess for gas flow path on the surface. The method according to the present invention comprises the steps of: roughening the surface of the recess for gas flow path to an arithmetic mean roughness (hereinafter referred to as "Ra") of 0.5 to 10 µm; and hydrophilizing the recess for gas flow path by a fluorine-containing gas.

### (Roughening step)

First, the roughening step in the present invention will be described.

### (Prescription of the surface roughness: blast, laser)

In the present invention, roughening of the surface of the recess for gas flow path can be carried out by at least one of a blast processing and laser processing. The surface roughness in the present invention is 0.5 to 10 µm in terms of an arithmetic mean roughness Ra. However, in cases where the roughening is carried out by the aforementioned processing technique(s), since larger Ra tends to result in an increase in the amount of separator surface polishing, it is preferable that the Ra be not greater than 6 µm from the standpoint of the thickness accuracy. In addition, since smaller irregularities tend to vary flood prevention, it is also preferably that the Ra be not less than 3 µm.

### (Prescription of the surface roughness: transfer)

Alternatively, the surface of the recess for gas flow path may also be roughened by a method in which a roughened surface of a mold for molding the separator is transferred in the molding step. In this case, the method is different from a blast processing and a laser processing in that there is no substantial polishing; therefore, the upper limit of the roughness does not have to be strict, and as the range of Ra in which flooding can be stably prevented, it is preferably that the Ra be 3 to 10 µm.

### (Fluorine treatment)

In order to achieve the object of the present invention, in the fuel cell separator which is made of a resin composition comprising a carbonaceous material (A) and a resin (B) and has a recess for gas flow path on the surface, it is required not only that the surface of the recess for gas flow path have a surface roughness of 0.5 to 10 µm in terms of arithmetic mean roughness Ra , but also that the surface of the recess for gas flow path be hydrophilized by a treatment with a fluorine-containing gas.

### (Hydrophilization)

Hydrophilization of a solid surface refers to improving the present manner of being wetted with water or making the contact angle with water smaller. In contrast, a water-repellent treatment refers to deteriorating the present manner of being wetted with water or making the contact angle with water larger. For hydrophilization of a solid surface, it is effective to modify the surface in such a manner that the molecular structure is electrically polarized, and in order to do so, it is preferable to introduce thereto a functional group such as a highly-polar carboxyl group, carbonyl group, hydroxy group, amino group, sulfone group or cyano group, or a highly-electronegative element, in a well-balanced manner. Examples of the method thereof include a method in which a high-energy treatment, such as plasma treatment, corona treatment, ozone treatment or UV treatment, is carried out under a prescribed atmosphere; a method in which the solid surface is brought into contact with a reactive gas; and a method in which the solid surface is immersed in a chemical agent such as a strong acid. In addition to these methods, examples also include a method in which the surface is coated with a hydrophilic coating agent and a method of surface modification by sputtering.

Further, in cases where the material originally has a polar group or the material has a surface static contact angle of not greater than 80°, hydrophilization is achieved in some cases only by performing a roughening treatment on the surface by a blast processing or the like.

The present inventor discovered that flooding can be suppressed by a method in which a roughening treatment and a treatment with a fluorine-containing gas are carried out in combination. The surface of the flow path on the separator treated with this method has a tremendously excellent persistence of hydrophilicity, compared to the aforementioned treatments disclosed in the prior patent documents.

### (Blast processing)

In the present invention, the condition of blast processing for the aforementioned roughening and/or hydrophilization is not particularly restricted. However, from the standpoint of the easiness in obtaining a desired treatment result, it is desired, for example, that an air blast treatment be performed from a distance of 20 to 1,000 mm from the surface layer using a pulverization material having an average particle diameter of 5 to 200 µm under conditions of blast pressure at 0.1 to 1.0 MPa, treatment time at 0.05 to 5 sec/cm² and blast amount at 0.1 to 5 kg/min. In addition, a treatment by wet blast may be employed.

### (Laser processing)

In the present invention, the laser processing for the aforementioned roughening and/or hydrophilization is not particularly restricted. However, from the standpoint of easiness in obtaining a desired treatment result, for example, an excimer laser, a semiconductor laser, a YAG laser, a CO₂ laser or a femtosecond laser can be used. Particularly, an excimer laser and an UV-YAG laser are preferably since the processing can be performed at a wavelength outside the ultraviolet region where a thermal damage is small. In a laser processing, compared to a blast processing, the control of the steps are easier since a decrease in the separator thickness is suppressed when obtaining a prescribed surface roughness.

### (Roughening treatment by transfer)

In the present invention, for the roughening treatment of the separator by transfer, a method in which a roughening treatment, such as a blast treatment or a photo-etching treatment is performed in advance on at least the portion of the mold surface corresponding to the recess of separator, followed by molding of separator using the mold while transferring the roughened pattern to the surface, can be employed. Cost reduction can be achieved since a roughening treatment after the molding of the separator is not performed in this method.

### (Treatment with a fluorine-containing gas)

In the present invention, as the fluorine-containing gas, for example, fluorine gas, hydrogen fluoride gas or the like can be used. In the present invention, the method of treatment with a fluorine-containing gas for hydrophilization is carried out by immersing the separator in an atmosphere of a fluorine-containing gas. From the standpoint of a simple hydrophilization treatment method, for example, it is preferably to place the separator into a corrosion-resistant airtight container and immerse the separator in an atmosphere of a fluorine gas diluted with a nitrogen gas or the like to a low concentration at a prescribe temperature and for a prescribed time, so that fluorine is gradually incorporated intramolecularly in the vicinity of the separator surface, thereby hydrophilizing the separator surface.

### (Conditions of the fluorine treatment)

The depth to which fluorine permeates from the separator surface and the fluorine content in the material after the fluorine treatment usually vary depending on the concentration of the fluorine gas during the fluorine treatment, as well as the temperature and the duration of the fluorine treatment. There is no particular restriction on these conditions; however, in the case of a high fluorine concentration, a long treatment time and a high treatment temperature, the fluorine content tends to become high and the separator surface may not be sufficiently hydrophilized as well. In order to achieve the object of the present invention, it is preferably that the separator surface be treated in an atmosphere of a mixed gas comprising fluorine and nitrogen, where the concentration of the fluorine gas is 0.01 to 20 percent by volume, at a temperature of 10 to 100°C for a treatment time of 1 to 30 minutes under a pressure of 0.9 to 1.2 atm. Further, it is preferable that the separator surface be treated in an atmosphere of a mixed gas comprising fluorine, oxygen and nitrogen, where the concentration of the fluorine gas is 0.01 to 10 % by volume and the concentration of the oxygen gas is 1 to 90 % by volume (the concentration of the fluorine gas + the concentration of the oxygen gas < 100 % by volume), at a temperature of 10 to 100°C for a treatment time of 1 to 30 minutes under a pressure of 0.9 to 1.2 atm. Here, it is more preferably that the separator surface be treated in an atmosphere of a mixed gas comprising fluorine, oxygen and nitrogen, where the concentration of the fluorine gas is 0.01 to 10 % by volume and the concentration of the oxygen gas is 1 to 100 times of the fluorine concentration, at a temperature of 10 to 100°C for a treatment time of 1 to 30 minutes under a pressure of 0.9 to 1.2 atm. An atmosphere containing a large amount of oxygen gas is preferably from the standpoint of a greater improvement on the hydrophilicity, as not only fluorine, but also oxygen tends to be incorporated to the separator surface in such an atmosphere.

### (Contents of fluorine atoms and the like)

The contents of the fluorine atoms and oxygen atoms incorporated into the separator surface by the treatment with a fluorine-containing gas (for example, to the depth of approximately 20 to 50 angstroms) are analyzed by X-ray electron spectroscopy (ESCA). In the present invention, the total fluorine atom content in the separator surface after the treatment with a fluorine-containing gas is preferably 2 to 45 % by atom, more preferably 4 to 30 % by atom, and particularly preferably 5 to 20 % by atom. A total fluorine atom content at less than 2 % by atom tends to result in almost no hydrophilization. On the other hand, a total fluorine atom content exceeding 45 % by atom is not preferably since the contact angle tends to become likely to return to the original.

### (Total oxygen atom content)

In the present invention, the separator surface also contains oxygen atoms at a total oxygen atom content of 5 to 60 % by atom. A total oxygen atom content exceeding 60 % by atom is not preferably as the surface becomes likely to be hydrolyzed and impurity ions tend to be released during the operation of the fuel cell.

### (The method of hydrophilicity evaluation)

There are various methods of hydrophilicity evaluation, and one in which the hydrophilicity is evaluated based on measured static contact angle of a liquid droplet is common. However, from a practical standpoint, measurement of the static contact angle does not necessarily offer a sufficient performance evaluation and it simply serves as one indication; therefore, methods of evaluating practical performance have been contrived in accordance with the application. In addition, measurement of dynamic contact angle and measurement of surface energy by a wetting agent listed in JIS K6768 have been commonly carried out.

Generally, hydrophilicity does not necessarily have a specific definition; however, in the present invention, hydrophilicity which is practical with respect to flooding prevention in the fuel cell is defined by the results of the evaluation carried out in accordance with the following evaluation method.

### (The method of evaluating hydrophilicity in the present invention)

The method of evaluating the hydrophilicity according to the present invention is a method of evaluating the hydrophilicity of a gas flow path of a fuel cell separator made of a resin composition comprising a carbonaceous material (A) and a resin (B), the fuel cell separator having a recess for the gas flow path. In the method, whether or not the object of the present invention is achieved is most simply and effectively evaluated based on whether or not a test piece prepared from the aforementioned composition can retain a uniform liquid film formed on the surface thereof for 10 seconds or longer when the test piece is immersed in water for 30 seconds and pulled out therefrom to a position at not less than 1 cm within 1 second. Accordingly, for the purpose of the present invention, such a separator having a surface which can satisfy the aforementioned condition is defined as that the separator has been imparted with a hydrophilicity practical against flooding prevention. The duration in which the test piece retains the uniform liquid film formed onto the surface thereof is preferably not less than 30 seconds, more preferably not less than 60 seconds, and still more preferably not less than 90 seconds.

With regard to the surface wetting property required for flooding prevention, it is not sufficient to simply make the static contact angle smaller in order to increase the hydrophilicity, thereby allowing the separator surface to be easily wetted. Rather, it is extremely preferable to prevent the flow path from being clogged by a liquid droplet. In order to attain this, it is required that the hysteresis (a difference between the retreat contact angle and the forward contact angle) measured in terms of a dynamic contact angle be made small. Therefore, for example, a method in which the hysteresis is measured and evaluated by using a Wilhelmy-type dynamic contact angle measuring device is also effective.

However, by using the evaluation method according to the present invention, the hydrophilicity effective in flooding prevention can be evaluated very simply with good reproducibility.

### (Component (A))

Component (A) which is the carbonaceous material of the present invention includes one selected from the group consisting of carbon black, carbon fiber, amorphous carbon, expanded graphite, artificial graphite, natural graphite, kish graphite, vapor-grown carbon fiber, carbon nanotube and fullerene, or a combination of two or more of these. Thereamong particularly preferably usable is a boron-containing artificial graphite.

### (Carbon black)

Examples of the carbon black, which is one example of the aforementioned carbonaceous material, include Ketchen black and acetylene black obtained by incomplete combustion of a natural gas or the like or thermal decomposition of acetylene; furnace carbon obtained by incomplete combustion of a hydrocarbon oil or natural gas; and thermal carbon obtained by thermal decomposition of natural gas.

### (Carbon fiber)

Examples of the aforementioned carbon fiber include pitch-based carbon fibers made from heavy oil, byproduct oil, coal tar or the like; and PAN-based carbon fibers made from polyacrylonitrile.

### (Amorphous carbon)

Examples of the method of obtaining the aforementioned amorphous carbon include a method in which a phenol resin is cured and subjected to a calcination treatment before being pulverized to powder; and a method in which a phenol resin is cured in the form of spherical or amorphous powder before being subjected to a calcination treatment. In order to obtain a highly-electroconductive amorphous carbon, the temperature of heat treatment is suitably not less than 2,000°C.

### (Expanded graphite powder)

The aforementioned expanded graphite powder is, for example, a powder obtained by subjecting a graphite having a highly-developed crystal structure (e.g. natural graphite or pyrolyzed graphite) to an immersion treatment in a strongly oxidative solution (e.g. a mixed solution of concentrated sulfuric acid and nitric acid or a mixed solution of concentrated sulfuric acid and hydrogen peroxide) to produce a graphite intercalation compound, which is then washed with water, and rapidly heated to expand the graphite crystal in the C-axis direction; or a powder obtained by once rolling the expanded graphite into the form of a sheet and subsequently pulverizing it.

### (Kish graphite)

The aforementioned kish graphite refers to a planarily crystallized carbon which precipitates as the temperature decreases during a preliminary treatment of molten iron. This kish graphite is generated as a mixture containing a slag and iron oxide; therefore, it is subjected to beneficiation to recover kish graphite having a high purity, which is then pulverized to powder having a size suitable for a particular use.

### (Artificial graphite)

In order to obtain the aforementioned artificial graphite, usually, a coke is produced first. A petroleum-based pitch, coal-based pitch or the like is used as the raw material for the coke. The coke is obtained by carbonizing such raw material. Examples of producing graphite powder from a coke generally include a method in which a coke is pulverized and then subjected to a graphitization treatment; a method in which a coke itself is graphitized before pulverization; and a method in which a coke added with a binder is molded and calcinated into a calcinated product (the coke and this calcinated product are together referred to as coke and the like), which is then subjected to a graphitization treatment and pulverized into powder. With regard to the raw material coke and the like, one having a developed crystal structure as less as possible is preferably; therefore, a raw material coke and the like treated at a temperature of not higher than 2,000°C, preferably not higher than 1,200°C, is suitable.

As the graphitization method, for example, a method in which coke powder is placed into a graphite crucible and directly electrified in an Acheson furnace or a method in which coke powder is heated by a graphite heating element can be employed.

### (Boron-containing carbonaceous material)

In the present invention, it is also preferably that the carbonaceous material contain boron at an amount of 0.05 to 5% by weight. In cases where the boron amount is less than 0.05% by weight, it tends to become difficult to attain a desired graphite powder having a high electroconductivity. In cases where the boron amount is greater than 5% by weight, it tends to become harder for boron to contribute to an improvement in the electroconductivity of the carbon material. The method of measuring the amount of boron contained in the carbonaceous material is not particularly restricted. In the present invention, a value measured by inductively-coupled plasma emission spectrometry (hereinafter, referred to as "ICP" for short) or inductively-coupled plasma mass spectrometry (hereinafter, referred to as "ICP-MS" for short) is used. Specifically, sulfuric acid and nitric acid are added to the sample and the thus obtained mixture is decomposed (digester method) by microwave heating (230°C), followed by a further decomposition of the resultant by an addition of perchloric acid (HClO₄) thereto, which the thus decomposed product is then diluted with water and loaded onto an ICP emission spectrometer for a measurement of the boron amount.

As the method of allowing the carbonaceous material to contain boron, B itself, B₄C, BN, B₂O₃, H₃BO₃ or the like can be added as the boron source into one of natural graphite, artificial graphite, kish graphite, expanded graphite, carbon black, carbon fiber, vapor-grown carbon fiber, carbon nanotube and the like, or into a mixture of one or more thereof, and subsequently, the resultant is thoroughly mixed and subjected to a graphitization treatment at approximately 2,300 to 3,200°C. In cases where the boron compound is not mixed uniformly, not only the resulting graphite powder becomes non-uniform, but also it is more likely to be sintered during the graphitization. In order to obtain a boron compound which is uniformly mixed, it is preferable that the boron source be made into powder having a particle diameter of not greater than 50 µm, preferably approximately not greater than 20 µm, before being mixed into powder of coke or the like.

Further, the mode of boron inclusion is not particularly restricted as long as boron and/or a boron compound is/are mixed into a graphite; however, examples of suitable mode include a mode in which boron is present between the layers of graphite crystal and a mode in which some of the carbon atoms constituting the graphite crystal are substituted with a boron atom. Furthermore, in cases where some of the carbon atoms are substituted with a boron atom, the binding between the boron atom and carbon atom can be any binding manner such as a covalent bond or ionic bond.

### (Pulverization of coke and the like)

For pulverization of the coke, artificial graphite, natural graphite and the like, for example, high-speed rotation pulverizers (hammer mill, pin mill, cage mill), various ball mills (roll mill, vibration mill, planetary mill) and stirring mills (bead mill, attritor, flow-tube mill, annular mill) can be used. In addition, a fine pulverizer such as a screen mill, a turbo mill, a super micron mill, or a jet mill can also be used by selecting a condition therefor. When pulverizing the coke, natural graphite and the like using such pulverizer(s), the average particle diameter and particle size distribution are controlled by selecting the pulverization condition and as required, classifying the powder.

### (Classification of coke and the like)

The method of classifying the coke powder, artificial graphite powder, natural graphite powder and the like is not restricted as long as separation is attainable; however, for example, a sieving method or an air classifier such as a forced vortex-type centrifugal classifier (micron separator, Turboplex, turbo classifier, super separator) and an inertial classifier (improved virtual impactor, elbow jet) can be used. Further, a wet-type sedimentation method, a centrifugal classification method or the like may be used.

### (Vapor-grown carbon fiber, carbon nanotube)

It is preferable that the component (A) of the present invention contain a vapor-grown carbon fiber and/or a carbon nanotube at an amount of 0.1 to 50% by weight, more preferably 0.1 to 45% by weight, and still more preferably 0.2 to 40% by weight.

Further, it is preferable that the vapor-grown carbon fiber or carbon nanotube contain boron at an amount of 0.05 to 5% by weight, more preferably 0.06 to 4% by weight, and still more preferably 0.06 to 3% by weight. When the boron amount is less than 0.05% by weight, the addition of boron offers only a small effect to improve the electroconductivity. On the other hand, when the boron is added at an amount greater than 5% by weight, impurities are generated at a greater amount and a propensity toward a deterioration in other physical properties becomes likely to arise.

### (Vapor-grown carbon fiber)

A vapor-grown carbon fiber refers to a carbon fiber having a fiber length of approximately 0.5 to 10 µm and a fiber diameter of not greater than 200 nm, which carbon fiber is obtained by subjecting the raw material of an organic compound, such as benzene, toluene, natural gas or hydrocarbon gas, to a thermal decomposition reaction along with a hydrogen gas at 800 to 1,300°C in the presence of a transition-metal catalyst such as ferrocene. The fiber diameter is more preferably not greater than 160 nm, and still more preferably not greater than 120 nm. A fiber diameter greater than 200 nm is not preferable since it leads to a decreased effect of attaining high electroconductivity. Further, it is preferable that a graphitization treatment be performed on the fiber at approximately 2,300 to 3,200°C after the thermal decomposition reaction. It is more preferable that the graphitization treatment be performed along with a graphitization catalyst such as boron, boron carbide, beryllium, aluminum or silicon at approximately 2,300 to 3,200°C in an inert gas atmosphere.

### (Carbon nanotube)

In recent years, carbon nanotubes have been drawing attention from the industrial field not only for their mechanical strength, but also for field emission performance and hydrogen-absorbing and storing performance. Further, their magnetic performance has also recently received attentions. Such carbon nanotubes are also called, for example, graphite whiskers, filamentous carbon, graphite fibers, ultra-thin carbon tubes, carbon tubes, carbon fibrils, carbon microtubes, carbon nanofibers, and have a fiber diameter of approximately 0.5 to 100 nm. Carbon nanotubes are classified into single-layer carbon nanotubes in which the graphite film constituting the tube is in a single layer and multi-layer carbon nanotubes in which the graphite films constituting the tube are layered. Either a single-layer or multi-layer carbon nanotube can be used in the present invention; however, a single-layer carbon nanotube is preferably since a composition having a higher electroconductivity and mechanical strength is likely to be obtained.

The carbon nanotube can be produced by, for example, an arc discharge method, a laser evaporation method or a thermal decomposition method which are described in "Fundamentals of Carbon Nanotubes" by Saito and Bando (pages 23 to 57; published by Corona Publishing Co., Ltd. (1998)), and by a further purification by a hydrothermal method, a centrifugal separation method, and ultrafiltration method, an oxidation method or the like in order to improve the purity. More preferably, the carbon nanotube is treated at a high temperature of approximately 2,300 to 3,200°C in an inert gas atmosphere in order to remove impurities. Still more preferably, the carbon nanotube is treated along with a graphitization catalyst, such as boron, boron carbide, beryllium, aluminum or silicon at a high temperature of approximately 2,300 to 3,200°C in an inert gas atmosphere.

### (The average particle diameter of component (A))

In the present invention, the average particle diameter of the component (A) was measured by a laser diffraction scattering method (Microtrack HRA analyzer; manufactured by Nikkiso Co., Ltd.). With regard to the measurement condition thereof, 50 mg of sample is weighed and added to 50 mL of distilled water. Thereto further added was 0.2 mL of 2% Triton solution (surfactant; manufactured by Wako Pure Chemical Industries, Ltd.) and the thus obtained mixture was subjected to ultrasonic dispersion for 3 minutes before measuring the number average particle diameter.

Further, as for the average fiber length of the carbonaceous fiber contained in the component (A), the number average fiber length was measured by image analyses of the length of 100 fibers observed by using a SEM (JSM-5510; manufactured by JEOL Ltd.). The term "fiber" as used herein refers to those having a ratio of the length of long axis to the length of short axis of not less than 10.

### (Component (B))

The component (B), which is the resin component of the present invention, is not particularly restricted. This component (B) may comprise, for example, a thermosetting resin and/or a thermoplastic resin. From the standpoint of durability thereof, a resin of which the melting point of the separator molded article or the glass-transition temperature is not less than 120°C is preferably.

In addition, in order to improve the hot water resistance, the separator molded article contains 0.5% by weight to 30% by weight of one or more components selected from 1,2-polybutadiene, 3,4-polyisoprene, polyethylene, polypropylene and polybutene-1.

### (Other additives)

In addition to the aforementioned component (A) and component (B), a monomer, a reaction initiating agent, an elastomer, a rubber, a resin modifier and the like may be contained as the component of the separator resin composition of the present invention.

It is preferable that the composition ratios of the component (A) and the component (B) in the present invention be 60 to 98% by weight and 40 to 2% by weight, respectively. Further, it is more preferable that the composition ratios of the component (A) and the component (B) be 70 to 98% by weight and 30 to 2% by weight, respectively, and still more preferably 80 to 98% by weight and 20 to 2% by weight, respectively. When the composition ratio of the component (A) is less than 60% by weight or when that of the component (B) is greater than 40% by weight, a required electroconductivity as the fuel cell separator is likely to be unattainable. Further, when the composition ratio of the component (A) is greater than 98% by weight or when that of the component (B) is less than 2% by weight, the moldability is inferior and the thickness accuracy tends to be easily deteriorated.

As the component of the separator resin composition according to the present invention, in order to improve the hardness, strength, electroconductivity, moldability, durability, weatherability, water resistance and the like, an additive such as a grass fiber, a whisker, a metallic oxide, an organic fiber, a UV stabilizer, an antioxidant, a mold-release agent, a lubricant, a water repellant, a thickening agent, a low-shrinking agent and a hydrophilicity-imparting agent may be added as required.

The method of producing the separator resin composition in the present invention is not particularly restricted; however, it is preferably that, for example, in the method of producing the resin composition, the aforementioned components be mixed as uniformly as possible by using a kneading machine commonly used in the field of resin production, such as a roll mill, an extruder, a kneader or a Banbury mixer.

### (Pulverization and granulation)

The separator resin composition according to the present invention may be pulverized or granulated after being kneaded or mixed for the purpose of facilitating the material supply to the molding machine or die. The pulverization may be performed by a homogenizer, a Wiley pulverizer, a high-speed rotation pulverizer (hammer mill, pin mill, cage mill, blender) or the like, and it is preferably that the pulverization be performed under cooling in order to prevent aggregation of the materials. The granulation may be performed by a method in which the resin composition is pelletized by using an extruder, a ruder, a co-kneader or the like, or by a method using a pan-type granulator or the like.

### (Molding method)

Further, in order to improve the dimensional accuracy of the separator, a preliminary shaped sheet is preferably molded by a flattening roller.

The method of molding the separator is not particularly restricted; however, the separator can be molded by, for example, injection molding, compression molding, injection-compression molding, sheet stamping molding or sheet-press molding.

### EXAMPLES

The present invention will now be described in more detail by way of examples thereof; however, the present invention is not in any way limited thereto.

### <Wettability test>

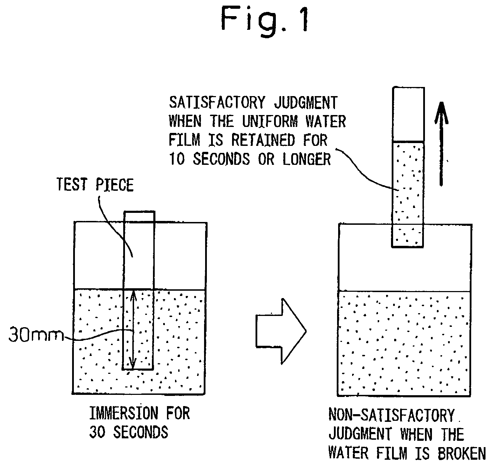

In the use environment of the fuel cell, particularly in a condition in which the gas utilization rate is high, a water droplet is likely to be formed in the separator flow path, causing a flooding phenomenon. As a countermeasure, a uniform thin water film can be formed by a hydrophilization of the flow path, thereby improving the wettability of the flow path and preventing the flow path from being clogged by a water droplet. Conventionally, as a method of evaluating a separator material, the wettability has been evaluated by measuring the static contact angle thereof in many cases; however, the static contact angle can evaluate only the manner of initial wetting; therefore, it does not serve as an evaluation of whether or not the uniform water film can persistently maintain the surface of the separator wet without running out of liquid. In order to most effectively prevent the flooding, it is important that the entire surface is immediately wetted uniformly from a dry condition and that the wet condition can be retained for any length of time. In view of the above, as the evaluation of the wettability, the retainability of the uniform liquid film formed on the surface of sample was evaluated by the method described in the following.
Test piece shape: 50 mm by 10 mm by 0.5 mm in thickness
Water: distilled water (temperature at 23°C, electroconductivity of not greater than 10 µS)
Measurement environment: 23°C, RH 50%
Procedures: (refer to Fig. 1)

1) Immerse the test piece to the depth of 30 mm in 100 cm³ of distilled water and leave it to stand for 30 seconds.
2) After the 30-second immersion, as shown in Fig. 1, pull out the test piece in the vertical direction from the water surface to a position at not less than 10 mm in the air within 1 second.
3) Measure the time between immediately after the pull-out and the point at which the portion immersed in the water (uniform water film) runs out of water.

The timing at which it is determined that the water has run out:
In any of the following cases, it is determined that "water has run out".
   (i) The moment at which the water film was broken.
   (ii) The moment at which the wet portion split into two or more.
   (iii) The moment at which the width of the wet portion or the area of the wet portion was reduced to a half or less.

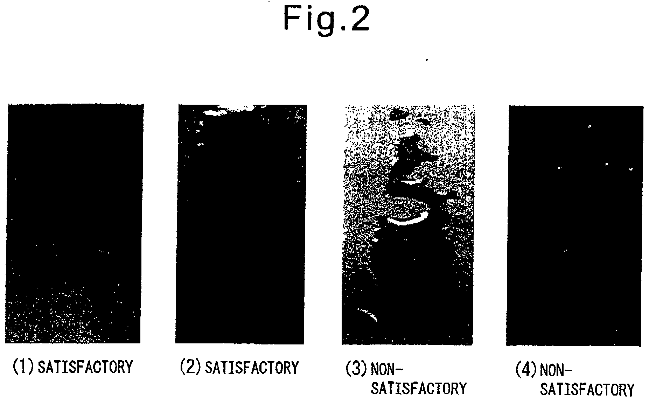

### Evaluation standards: (refer to Fig. 2)

It was determined to be satisfactory when the water film was retained uniformly for 10 seconds or longer (based on the average value of 5 test pieces).

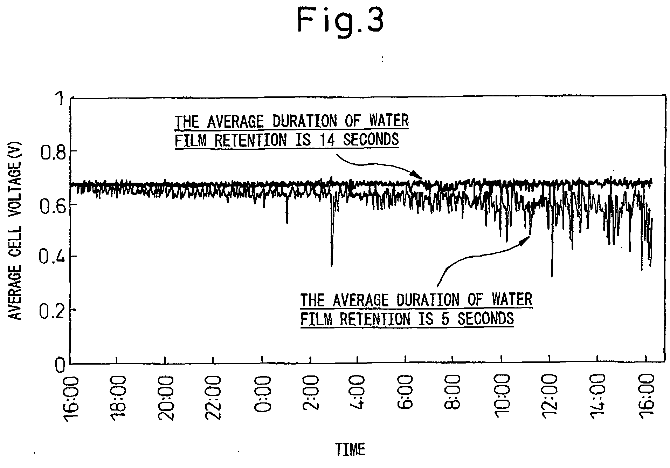

For those materials which allowed the water film to be retained for 10 seconds or longer in the present evaluation method, a stable power output was attained when separators were formed from those materials and were incorporated into a solid polymer electrolyte fuel cell (PEFC) and the fuel cell having 10 cell stack was subjected to full-load power generation for 24 hours in operating conditions of the fuel utilization rate at 85%; the air utilization rate at 70%; the cell temperature at 70°C; and the current density at 0.4 A/cm². In contrast, those materials which had a water film retaining time of less than 10 seconds resulted in a non-stable power output and had a propensity toward flooding. The results are shown in Fig. 3.

### <Materials>

**Table 1**

| Substance name | | Composition ratio (% by weight) |
|---|---|---|
| Binder | 1,2-polybutadiene ^{a)} | 7.09 |
| | 1,2-polybutadiene ^{b)} | 3.54 |
| | Low-density polyethylene ^{c)} | 3.54 |
| Graphite | Artificial graphite ^{d)} | 85.1 |
| Reaction initiating agent | 2,5-demethyl-2,5-di(t-butylperoxy)hexane ^{e)} | 0.71 |

| | | |
|---|---|---|
| a) NISSO-PB B-3000; manufactured by Nippon Soda Co., Ltd. b) JSR RB-810; manufactured by JSR c) Novatech^{®} LD LJ802; manufactured by Japan Polyethylene Corporation d) manufactured by Showa Denko K.K. e) Kayahexa AD; manufactured by Kayaku Akzo Co., Ltd. | | |

### Example 1

As the carbonaceous material, MC coke manufactured by MC Carbon Co. Ltd., which is a non-needle coke, was coarsely pulverized to a size of not larger than 3 mm using a pulverizer (manufactured by Hosokawa Micron Corporation). The thus coarsely pulverized article was then finely pulverized by a jet mill (IDS2UR; manufactured by Nippon Pneumatic MFG. Co., Ltd.). Subsequently, by the resultant was adjusted to a desired particle diameter by classification. Those particles having a particle diameter of not greater 5 µm were removed by air classification using a turbo classifier (TC15N; manufactured by Nisshin Engineering Inc.). Added to a portion of the thus adjusted finely pulverized article of 14.85 kg was 0.15 kg of boron carbide (B₄C) and the resultant was mixed for 5 minutes using a Henschel mixer at 800 rpm. Subsequently, 1 kg of the thus mixed product was encapsulated into a 1.5-litre graphite crucible with a cover, which was then placed in a graphitization furnace using a graphite heater. The furnace was once evacuated to a vacuum condition to subject the mixed product to substitution with an argon gas, and the resultant was graphitized in an argon gas flow at a furnace inner pressure of 1.2 atm and a temperature of 2,800°C. Thereafter, the thus obtained powder was allowed to cool in an argon gas atmosphere and taken out to obtain 0.94 kg of graphite fine powder (A1). The average particle diameter of the thus obtained graphite fine powder was 20 µm.

Next, with the aforementioned graphite fine powder, the materials were mixed in accordance with the composition ratio indicated in Table 1, and the resultant was kneaded for 5 minutes by a Laboplastomill (manufactured by Toyo Seiki Seisaku-Sho, Ltd.) at a temperature of 100°C and a rotation speed of 40 rpm to obtain a graphite resin composition. Then, using a Wiley pulverizer (manufactured by Yoshida Seisakusho Co., Ltd.), the thus obtained graphite resin composition was pulverized to fine powder having a minus sieve of not larger than 2 mm. The thus obtained fine powder was heated in an oven to 90°C and supplied to a 10-inch roll (manufactured by Daihan Co., Ltd.) adjusted to have a roll surface temperature of 30°C to obtain a uniform green sheet having a thickness of 0.8 mm.

The thus obtained green sheet was loaded to four types of molds, each having a different surface roughness, and cured using a 50 ton hot press (manufactured by Meiki., Ltd.) in conditions of the curing temperature at 180°C and the curing time for 8 minutes, thereby obtaining four types of test pieces, each having a dimension of 100 mm by 100 mm by 0.5 mm in thickness and a different surface roughness. The surfaces of the used molds had been treated in advance by sandblasting and the arithmetic mean roughnesses Ra were 0.57, 1.23, 2.95 and 5.01 µm, respectively. Both surfaces of the test pieces molded by these molds had the surface roughness of the respective mold transferred thereonto. The surfaces of these molds were treated with a silicone-based mold-release agent at the time of molding. The surface roughness of each of the test pieces are shown in Table 2. In the present invention, arithmetic mean roughnesses (Ra) were determined by measuring, in accordance with JIS B0601 (1994), the wave profile of the on-line roughness at 10 spots at a measurement distance of 500 µm using Super Depth Surface Profile Measurement Microscope VK8550 manufactured by Keyence Corporation as the measuring apparatus with an objective lens having a magnification of 20 times and no cut-off to calculate an average value of Ra. At this stage (without a fluorine treatment described later), the total fluorine atom content and the total oxygen atom content on the surfaces of the test pieces were measured by an ESCA analyzer (Quantera SXM; manufactured by ULVAC-PHI Incorporated) to be 0 % by atom of F and 0 % by atom of O.

### (Fluorine treatment)

In order to further perform a fluorine treatment on the surfaces of the test pieces having four types of surface roughness, three test pieces each were placed in a 3-litre Teflon^{®} container. After evacuating the container with a vacuum pump, a mixture of 4 % by volume of fluorine gas, 80 % by volume of oxygen gas and 16 % by volume of nitrogen gas was introduced into the container to treat the test pieces for 20 minutes at a pressure of 1 atm and a temperature of 40°C. Thereafter, inside the container was once subjected to a nitrogen substitution before removing the test pieces. The thus removed test pieces were immersed in a warm water of 60°C for 15 hours, followed by drying for 3 hours at 60°C using a hot-air dryer. The total fluorine atom content and the total oxygen atom content on the surfaces of the test pieces treated with fluorine were measured by an ESCA analyzer (Quantera SXM; manufactured by ULVAC-PHI Incorporated) to be 23.4 % by atom of F and 8.5 % by atom of O.

The thus obtained test pieces were cut into a size of 50 mm by 10 mm by 0.5 mm in thickness and evaluated by the wettability test. The results thereof are shown in Table 2. It was found that all of the uniform water films were retained for 10 seconds or longer, indicating that stable water films were formed. Especially when the arithmetic mean roughness (Ra) was not less than 1.0 µm, it was found that such water films were retained for 60 seconds or longer and that they were maintained wet very stably. In addition, it was found that the retention time was extended to 90 seconds or longer due to an increase in the amount of the retained water on the surface when the arithmetic mean roughness (Ra) was greater than 3 µm.

**Table 2**

| | Surface roughness Ra of the mold | Surface roughness Ra of the molded article | Example 1 |
|---|---|---|---|
| (1) | 0.57 | 0.63 | Good (12 sec) |
| (2) | 1.23 | 1.42 | Good (78 sec) |
| (3) | 2.95 | 3.11 | Good (98 sec) |
| (4) | 5.01 | 5.16 | Good (102 sec) |

### Comparative Example 1

Using the mold used in Example 1 and a mirror-finished mold having Ra of 0.016 µm and Rmax of 0.186 µm, the green sheet of the graphite resin composition obtained in Example 1 was cured in the same manner as in Example 1 without performing the subsequent fluorine treatment, thereby obtaining five types of test pieces, each having a dimension of 100 mm by 100 mm by 0.5 mm in thickness and a different surface roughness. The surface roughness of each of the test pieces are shown in Table 3.

The thus obtained test pieces were cut into a size of 50 mm by 10 mm by 0.5 mm in thickness and evaluated by the wettability test. The results thereof are shown in Table 3. The results indicate that most of the water films were broken in 1 second or less and therefore, could not be retained.

### Comparative Example 2

After performing the same fluorine treatment as in Example 1 on the test pieces molded in Comparative Example 1 having a surface roughness Ra of 0.05 µm, the thus fluorine-treated test pieces were cut into a size of 50 mm by 10 mm by 0.5 mm in thickness and evaluated by the wettability test. The results thereof are shown in Table 3.

### Comparative Example 3

Three test pieces molded in Comparative Example 1 having a surface roughness Ra of 0.05 µm were placed in a 3-litre Teflon^{®} container. Then, after evacuating the container to a vacuum condition by a vacuum pump, a mixture of 13 % by volume of fluorine gas, 34 % by volume of oxygen gas and 53 % by volume of nitrogen gas was introduced into the container to treat the test pieces for 10 minutes at a pressure of 1 atm and a temperature of 40°C. Thereafter, the container was once again made to a vacuum condition by evacuating the gases, and a mixture of 13 % by volume of fluorine gas and 87 % by volume of nitrogen gas was freshly introduced into the container to treat the test pieces for 10 minutes at a pressure of 1 atm and a temperature of 40°C. Subsequently, inside the container was once subjected to a nitrogen substitution before removing the test pieces. The thus removed test pieces were immersed in a warm water of 60°C for 15 hours, followed by drying for 3 hours at 60°C using a hot-air dryer.

The test pieces obtained by the aforementioned treatment were cut into a size of 50 mm by 10 mm by 0.5 mm in thickness and evaluated by the wettability test. The results are shown in Table 3.

As can be seen from Table 3, although the water film was retained for a longer period in Comparative Examples 2 and 3 compared to Comparative Example 1, the retention time was less than 10 seconds and therefore, not satisfactory.

**Table 3**

| | Surface roughness Ra of the mold | Surface roughness Ra of the molded article | Comparative Example 1 | Comparative Example 2 | Comparative Example 3 |
|---|---|---|---|---|---|
| (1) | 0.016 | 0.05 | Bad (< 1 sec) | Bad (5 sec) | Bad (6 sec) |
| (2) | 0.57 | 0.63 | Bad (< 1 sec) | | |
| (3) | 1.23 | 1.42 | Bad (< 1 sec) | | |
| (4) | 2.95 | 3.11 | Bad (< 1 sec) | | |
| (5) | 5.01 | 5.16 | Bad (< 1 sec) | | |

### Example 2

Using a mirror-finished mold having Ra of 0.016 µm and Rmax of 0.186 µm, the green sheet of the graphite resin composition obtained in Example 1 was cured in the same manner as in Example 1 to obtain test pieces having a dimension of 100 mm by 100 mm by 0.5 mm in thickeness and a surface roughness Ra of 0.07 µm. Further, using a direct-pressure-type sandblasting machine manufactured by Fuji Manufacturing Co., Ltd., both surfaces of the test pieces were treated in the four conditions shown in Table 4 while using Fujirandom C as the medium and the same injection amount of 1.5 kg/min. The surface roughnesses of the test pieces after the blast treatment are shown in Table 4.

Still further, the test pieces obtained by the blast treatment in such a manner that each thereof has a different surface roughness were subjected to the same fluorine treatment as in Example 1. Subsequently, the thus fluorine-treated test pieces were cut into a size of 50 mm by 10 mm by 0.5 mm in thickness and evaluated by the wettability test. The results thereof are shown in Table 4. The total fluorine atom content and the total oxygen atom content on the surfaces of the test pieces treated with fluorine were measured by an ESCA analyzer to be 18.4 % by atom of F and 9.1 % by atom of O.

### Comparative Example 4

The test pieces blast-treated in Example 2 were, without a fluorine treatment, cut into a size of 50 mm by 10 mm by 0.5 mm in thickness and evaluated by the wettability test.

As can be seen from the results shown in Table 4, although the blast treatment alone resulted in inferior retainabilities of the water films, the retainabilities of the water films were considerably improved by performing the fluorine treatment after the blast treatment.
[Table 4]

**Table 4**

| Conditions of blast treatment | | | | | Surface roughness Ra after the treatment (µm) | Results of wettability evaluation | |
|---|---|---|---|---|---|---|---|
| | Injection pressure (MPa) | Injection distance (mm) | Treatment time (sec/cm²) | Medium particle size | | Example 2 | Comparative Example 4 |
| Condition 1 | 0.2 | 200 | 0.15 | #800 | 0.61 | Good (31 sec) | Bad (< 1 sec) |
| Condition 2 | 0.2 | 200 | 0.3 | #600 | 1.20 | Good (86 sec) | Bad (< 1 sec) |
| Condition 3 | 0.3 | 100 | 0.3 | #600 | 1.49 | Good (89 sec) | Bad (< 1 sec) |
| Condition 4 | 0.5 | 200 | 0.3 | #600 | 2.77 | Good (105sec) | Bad (< 1 sec) |

### Example 3

Using a mirror-finished mold having Ra of 0.016 µm and Rmax of 0.186 µm, the green sheet of the graphite resin composition obtained in Example 1 was cured in the same manner as in Example 1 to obtain test pieces having a dimension of 100 mm by 100 mm by 0.5 mm in thickness and a surface roughness (Ra) of 0.07 µm. Further, using a KrF excimer laser processing system manufactured by Sinozaki Manufacturing Co., Ltd., the cured test piece surfaces were irradiated with a laser to obtain test pieces having an arithmetic mean roughness Ra of 0.53 µm and 2.11 µm.

Next, after performing the same fluorine treatment as in Example 1, the thus fluorine-treated test pieces were cut into a size of 50 mm by 10 mm by 0.5 mm in thickness and evaluated by the wettability test. The results thereof are shown in Table 5. The total fluorine atom content and the total oxygen atom content on the surfaces of the test pieces treated with fluorine were measured by an ESCA analyzer to be 12 % by atom of F and 10 % by atom of O.

### Comparative Example 5

The test pieces laser-treated in Example 3 were, without a fluorine treatment, cut into a size of 50 mm by 10 mm by 0.5 mm in thickness and evaluated by the wettability test. The results thereof are shown in Table 5.

**Table 5**

| Surface roughness Ra of the test piece after the laser irradiation | Example 3 | Comparative Example 5 |
|---|---|---|
| 0.53 | Good (37 sec) | Bad (< 1 sec) |
| 2.11 | Good (107 sec) | Bad (< 1 sec) |

As can be seen from the results shown in Table 5, although the laser treatment alone resulted in inferior retainabilities of the water films, the retainabilities of the water films were considerably improved by performing the fluorine treatment after forming irregularities on the surface by the laser irradiation.

### <Evaluation of hysteresis based on dynamic contact angle>

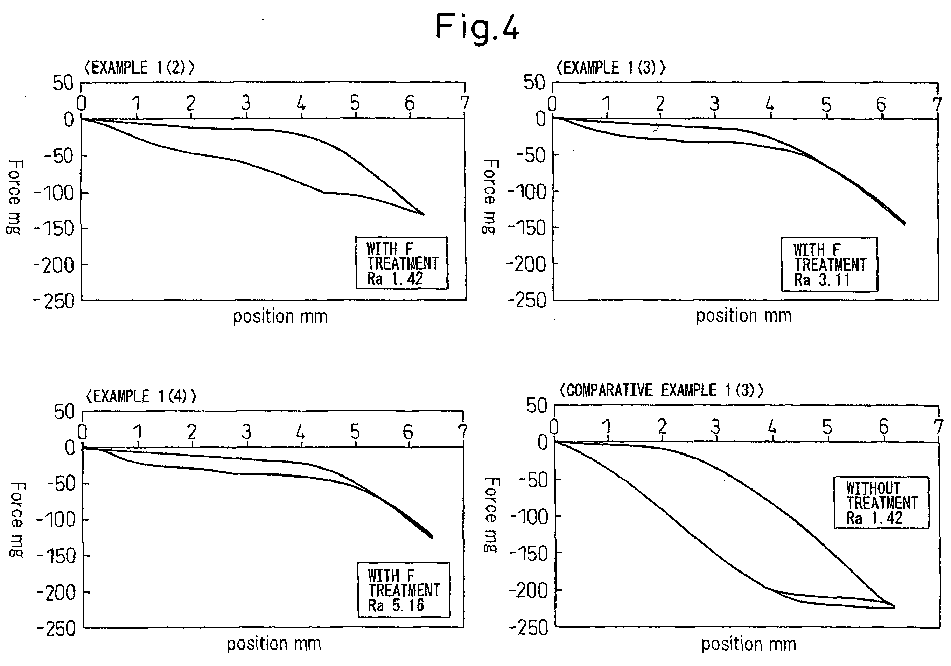

Differences in hysteresis were compared and investigated by evaluating the dynamic contact angles of those test pieces produced in Example 1 having an arithmetic mean roughness (Ra) of both surfaces of 1.42 µm, 3.11 µm and 5.16 µm and the test piece produced in Comparative Example 1 having an arithmetic mean roughness (Ra) of 1.42 µm. Using DCA-315 manufactured by Cahn Instruments, Inc. as the dynamic contact angle analyzer, the hysteresis behavior was investigated for 5 cycles by moving the test pieces into and out of distilled water in conditions of the stage speed of 80 mm/min, the immersion distance from the water surface of 6 mm and the dwell time of 30 seconds. The measurements were carried out in conditions of room temperature at 23°C and humidity (RH) of 50%. The size of the test pieces was 50 mm by 10 mm by 0.5 mm in thickness. Fig.4 shows graphs indicating the hysteresis behavior after the first cycle. According to Fig. 4, it was revealed that, compared to the test pieces of Example 1, the test piece of Comparative Example 1 exhibited a larger difference between contact angle when moving the test piece into water and contact angle when moving the test piece out of water in the hysteresis and that it was more difficult for the water film to be formed. Further, also among the test pieces of Example 1, it was revealed that the difference in the hysteresis was smaller when the test pieces had a larger arithmetic mean roughness (Ra) of 3.11 µm and 5.16 µm, compared to the other test piece having an arithmetic mean roughness (Ra) of 1.42 µm. These results suggest that the hydrophilicity is improved by performing a fluorine treatment on a surface roughened in such a manner to have Ra of approximately 3 µm or larger.

### Example 4 and Comparative Example 6

### <Evaluation on the retainability of the wettability>

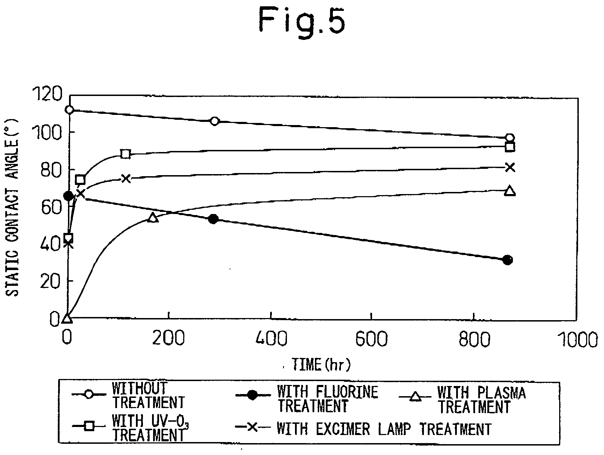

Using a mold having a surface having an arithmetic mean roughness (Ra) of 1.23 µm, the green sheet of the graphite resin composition obtained in Example 1 was cured in the same manner as in Example 1 to obtain test pieces of the molded articles having a dimension of 100 mm by 100 mm by 0.5 mm in thickness and both surfaces having an arithmetic mean roughness (Ra) of 1.47 µm. The thus obtained test pieces were then cut into a size of 50 mm by 10 mm by 0.5 mm in thickness. The test pieces were subjected to a fluorine treatment, a plasma treatment, a UV-O₃ treatment or an excimer lamp treatment, while no treatment was performed on one of the test piece. The conditions for each of these treatments are described later. The surface-treated test pieces and non-treated test piece were all adjusted for 12 hours in an environment at a temperature of 23°C and humidity of 50%. Thereafter, these test pieces were placed in a 700-mL stainless airtight container filled with 500 mL of water and adjusted in an oven at 90°C. The test pieces were subsequently evaluated for the retainability of the wettability based on static contact angle analyses. The relations between the immersion time and the static contact angles are shown in Fig. 5. The static contact angles were measured using a contact angle meter, CA-DT, manufactured by Kyowa Interface Science Co., Ltd. at 23°C and RH of 50%. The samples taken out from hot water of 90°C were gently blotted with Kimwipe to remove the water content from the surface. After drying the samples for 30 minutes in an oven at 100°C, the static contact angles were measured.

### (Conditions of fluorine treatment)

After placing the test pieces in a 3-litre Teflon^{®} container and evacuating the container to a vacuum condition by a vacuum pump, a mixture of 4 % by volume of fluorine gas, 80 % by volume of oxygen gas and 16 % by volume of nitrogen gas was introduced into the container to treat the test pieces for 20 minutes at a pressure of 1 atm and a temperature of 40°C. Thereafter, inside the container was once subjected to a nitrogen substitution before removing the test piece(s). The thus removed test pieces were immersed in a warm water of 60°C for 15 hours, followed by drying for 3 hours at 60°C using a hot-air dryer.

### (Conditions of plasma treatment)

Using a plasma cleaning device, SAMCO PC-1000, manufactured by SAMCO, Inc.; the plasma treatment was carried out for 180 seconds with a high-frequency wave output of 500W and oxygen gas, while maintaining the gas flow rate at 100 SCCM and the inner pressure at 15 Pa.

### (Conditions for UV-O₃ treatment)

Using a UV-O₃ Cleaning/Modifying system, OC2503, manufactured by Iwasaki Electric Co., Ltd., the UV-O₃ treatment was carried out with three 25W-lamps for 900 seconds at an irradiation distance of 25 mm, a UV-radiation intensity (at 254 nm) of 9 mW/cm² and an ozone concentration of 300 ppm.

### (Excimer lamp treatment)

Using an excimer lamp system, UEEX204/UBEX204, manufactured by Iwasaki Electric Co., Ltd., the excimer lamp treatment was carried out with four EX240-1 lamps for 180 seconds at an irradiation distance of 2 mm and a UV-radiation intensity (at 172 nm) of 15 mW/cm².

As can be seen from Fig. 5, the test pieces subjected to a plasma treatment, a UV-O₃ treatment, or an excimer lamp treatment exhibited an extremely small static contact angle immediately after the treatment and had been considerably hydrophilized; however, their static contact angles returned almost completely to those prior to the treatment in one week once being immersed in a hot water of 90°C. In contrast, as for the fluorine-treated articles, it was discovered that their static contact angles had a propensity toward decreasing over time and that these articles had a retained hydrophilicity.

### INDUSTRIAL APPLICABILITY

The fuel cell separator according to the present invention can be used to produce a fuel cell which can achieve stable generation of electricity over a prolonged period.

## Claims

1. A method of producing a fuel cell separator made of a resin composition comprising a carbonaceous material (A) and a resin (B) containing from 0.5 to 30 % by weight, based on the weight of the separator, of one or more components selected from 1,2-polybutadiene, 3,4-polyisoprene, polyethylene, polypropylene and polybutene-1, the fuel cell separator having a recess for gas flow path on a surface of the separator; comprising the steps of
roughening a surface of the recess for gas flow path to an arithmetic mean roughness Ra of 0.5 to 10 µm; and
hydrophilizing the recess for gas flow path;
**characterized in that** the step of hydrophilizing the recess for gas flow path is carried out by immersing the separator in an atmosphere of a fluorine-containing gas.

2. The method of producing a fuel cell separator according to claim 1, wherein the arithmetic mean roughness Ra of the surface of the recess for gas flow path is 3 to 6 µm.

3. The method of producing a fuel cell separator according to claim 1 or 2, wherein the step of roughening a surface of the recess for gas flow path is carried out by at least one of blast processing and laser processing.

4. The method of producing a fuel cell separator according to claim 1 or 2, wherein the surface of the recess for gas flow path is roughened by transferring a roughness of a roughened surface of a mold for molding the separator to the surface of the recess for gas flow path in the step for molding the separator.

5. A fuel cell separator, made of a resin composition comprising a carbonaceous material (A) and a resin (B) containing from 0.5 to 30 % by weight, based on the weight of the separator, of one or more components selected from 1,2-polybutadiene, 3,4-polyisoprene, polyethylene, polypropylene
and polybutene-1, and having a recess for gas flow path on a surface of the separator, wherein a surface of the recess for gas flow path has an arithmetic mean roughness Ra of 0.5 to 10 µm,
**characterized in that** the surface of the recess for gas flow path has a total fluorine atom content analyzed by X-ray electron spectroscopy of 2 to 45 percent by atom and a total oxygen atom content analyzed by X-ray electron spectroscopy of 5 to 60 percent by atom, wherein the surface of the separator has been hydrophilised by immersing the separator in an atmosphere of fluorine-containing gas.

6. The fuel cell separator according to claim 5, wherein the arithmetic mean roughness Ra is 3 to 10 µm.

7. The fuel cell separator according to claim 5 or 6, the fuel cell separator having a recess for gas flow path on a surface of the separator; wherein the fuel cell separator has a water film retention time of 10 seconds or longer, where the water film retention time is measured by
immersing the fuel cell separator or a strip-shaped test piece of the fuel cell separator in water at 23 °C having an electroconductivity not greater than 10 µS for 30 seconds;
pulling it out in the vertical direction from the surface of the water to a position at not less than 1 cm in the air within 1 second;
measuring a duration in which a uniform water film formed on the surface of the separator is retained by determining the time at which the uniform water film runs out of water, i.e.
(i) the moment at which the water film is broken, or
(ii) the moment at which the wet portion is split into two or more, or
(iii) the moment at which the width of the wet portion or the area of the wet portion is reduced to a half or less; and
defining the duration as "water film retention time".

## Patentansprüche

1. Verfahren zur Herstellung eines Brennstoffzellenseparators einer Harzzusammensetzung, die ein kohlenstoffhaltiges Material (A) und ein Harz (B) enthält, das 0,5 bis 30 Gewichts%, bezogen auf das Gewicht des Separators, einer oder mehrerer Komponenten enthält, die unter 1,2-Polybutadien, 3,4-Polyisopren, Polyethylen, Polypropylen und Polybuten-1 ausgewählt sind, wobei der Brennstoffzellenseparator auf einer seiner Oberflächen eine Einbuchtung für einen Gasstromweg aufweist; welches die Stufen umfasst, in denen
die Oberfläche der Einbuchtung für den Gasstromweg auf eine arithmetisch mittlere Rauheit Ra von 0,5 bis 10 µm aufgeraut wird; und
die Einbuchtung für den Gasstromweg hydrophilisiert wird;
**dadurch gekennzeichnet, dass** die Stufe der Hydrophilisierung der Einbuchtung für den Gasstromweg durchgeführt wird, indem der Separator in eine Atmosphäre eines Fluor enthaltenden Gases eingetaucht wird.

2. Verfahren zum Herstellen eines Brennstoffzellenseparators nach Anspruch 1, wobei die arithmetisch mittlere Rauheit Ra der Oberfläche der Einbuchtung für den Gasstromweg 3 bis 6 µm ist.

3. Verfahren zum Herstellen eines Brennstoffzellenseparators nach Anspruch 1 oder 2, wobei die Stufe des Aufrauens einer Oberfläche der Einbuchtung für den Gasstromweg mindestens durch Blasverarbeitung und Laserverarbeitung durchgeführt wird.

4. Verfahren zum Herstellen eines Brennstoffzellenseparators nach Anspruch 1 oder 2, wobei die Oberfläche der Einbuchtung für den Gasstromweg durch Übertragen der Rauheit einer aufgerauten Oberfläche einer Form zum Formen des Separators auf die Oberfläche der Einbuchtung für den Gasstromweg in der Stufe der Separatorformung durchgeführt wird.

5. Brennstoffzellenseparator aus einer Harzzusammensetzung, die ein kohlenstoffhaltiges Material (A) und ein Harz (B) umfasst, das 0,5 bis 30 Gewichts%, bezogen auf das Gewicht des Separators, einer oder mehrerer Komponenten enthält, die unter 1,2- Polybutadien, 3,4-Polyisopren, Polyethylen, Poly-propylen und Polybuten-1 ausgewählt sind, wobei der Brennstoffzellenseparator eine Einbuchtung für einen Gasstromweg auf der Oberfläche des Separators aufweist, wobei die Oberfläche der Einbuchtung für den Gasstromweg eine arithmetisch mittlere Rauheit Ra von 0,5 bis 10 µm aufweist,
**dadurch gekennzeichnet, dass** die Oberfläche der Einbuchtung für den Gasstromweg einen durch Röntgenstrahlelektronenspektroskopie analysierten Gesamtfluoratomgehalt von 2 bis 45 Atomprozent und einen durch Röntgenstrahlelektronenspektroskopie analysiert Gesamtsauerstoffatomgehalt von 5 bis 60 Atomprozent aufweist, wobei die Oberfläche des Separators durch Eintauchen des Separators in eine Atmosphäre eines Fluor enthaltenden Gases hydrophilisiert worden ist.

6. Brennstoffzellenseparator nach Anspruch 5, wobei die arithmetisch mittlere Rauheit Ra 3 bis 10 µm ist.

7. Brennstoffzellenseparator nach Anspruch 5 oder 6 mit einer Einbuchtung für einen Gasstromweg auf einer Oberfläche des Separators, wobei der Brennstoffzellenseparator eine Wasserfilmrückhaltezeit von 10 Sekunden oder länger aufweist, wobei die Wasserfilmrückhaltezeit dadurch gemessen wird, dass
der Brennstoffzellenseparator oder ein streifenförmiges Probestück des Brennstoffzellenseparators bei 23°C in Wasser einer Elektroleitfähigkeit von nicht mehr als 10 µS während 30 Sekunden eingetaucht wird;
der Separator oder das Probestück innerhalb einer Sekunde in vertikaler Richtung aus der Oberfläche des Wassers in eine Position von nicht weniger als 1 cm in der Luft gezogen wird;
die Dauer gemessen wird, während der ein gleichförmiger Wasserfilm, der sich auf der Oberfläche des Separators gebildet hat, erhalten bleibt, indem der Zeitpunkt ermittelt wird, an dem der gleichförmige Wasserfilm das Wasser verliert, das heißt
(i) der Zeitpunkt, an dem der Wasserfilm auseinanderreißt oder
(ii) der Zeitpunkt, an dem der nasse Bereich in zwei oder mehr Bereiche aufgetrennt wird, oder
(iii) der Zeitpunkt, an dem die Breite des nassen Bereichs oder die Fläche des nassen Bereichs auf die Hälfte oder weniger verringert worden ist; und
indem die Dauer als "Wasserfilmrückhaltezeit" definiert wird.

## Revendications

1. Procédé de production d'un séparateur de pile à combustible constitué d'une composition de résine comprenant un matériau carboné (A) et une résine (B) contenant de 0,5 à 30 % en masse, rapporté à la masse du séparateur, d'un ou plusieurs constituants choisis parmi le 1,2-polybutadiène, le 3,4-polyisoprène, le polyéthylène, le polypropylène et le polybutène-1, le séparateur de pile à combustible présentant un creux pour trajectoire d'écoulement de gaz sur une surface du séparateur ;
comprenant les étapes consistant
à rendre une surface du creux pour trajectoire d'écoulement de gaz rugueuse à une rugosité arithmétique moyenne Ra de 0,5 à 10 µm ; et
à rendre le creux pour trajectoire d'écoulement de gaz hydrophile ;
**caractérisé en ce que** l'étape consistant à rendre le creux pour trajectoire d'écoulement de gaz hydrophile est réalisée par immersion du séparateur dans une atmosphère d'un gaz contenant du fluor.

2. Procédé de production d'un séparateur de pile à combustible selon la revendication 1, dans lequel la rugosité arithmétique moyenne Ra de la surface du creux pour trajectoire d'écoulement de gaz est de 3 à 6 µm.

3. Procédé de production d'un séparateur de pile à combustible selon la revendication 1 ou 2, dans lequel l'étape consistant à rendre une surface du creux pour trajectoire d'écoulement de gaz rugueuse est réalisée par au moins un d'un traitement de sablage et d'un traitement au laser.

4. Procédé de production d'un séparateur de pile à combustible selon la revendication 1 ou 2, dans lequel la surface du creux pour trajectoire d'écoulement de gaz est rendue rugueuse par transfert d'une rugosité d'une surface rendue rugueuse d'un moule pour moulage du séparateur à la surface du creux pour trajectoire d'écoulement de gaz dans l'étape de moulage du séparateur.

5. Séparateur de pile à combustible, constitué d'une composition de résine comprenant un matériau carboné (A) et une résine (B) contenant de 0,5 à 30 % en masse, rapporté à la masse du séparateur, d'un ou plusieurs constituants choisis parmi le 1,2-polybutadiène, le 3,4-polyisoprène, le polyéthylène, le polypropylène et le polybutène-1, et présentant un creux pour trajectoire d'écoulement de gaz sur une surface du séparateur, dans lequel une surface du creux pour trajectoire d'écoulement de gaz présente une rugosité arithmétique moyenne Ra de 0,5 à 10 µm,
**caractérisé en ce que** la surface du creux pour trajectoire d'écoulement de gaz présente une teneur totale en atome de fluor analysée par spectroscopie électronique aux rayons X de 2 à 45 pourcent par atome et une teneur totale en atome d'oxygène analysée par spectroscopie électronique aux rayons X de 5 à 60 pourcent par atome, dans lequel la surface du séparateur a été rendue hydrophile par immersion du séparateur dans une atmosphère de gaz contenant du fluor.

6. Séparateur de pile à combustible selon la revendication 5, dans lequel la rugosité arithmétique moyenne Ra est de 3 à 10 µm.

7. Séparateur de pile à combustible selon la revendication 5 ou 6, le séparateur de pile à combustible présentant un creux pour trajectoire d'écoulement de gaz sur une surface du séparateur ; dans lequel le séparateur de pile à combustible présente une durée de rétention de film d'eau de 10 secondes ou supérieure, où la durée de rétention de film d'eau est mesurée par
immersion du séparateur de pile à combustible ou d'une pièce de test en forme de bande du séparateur de pile à combustible dans de l'eau à 23 °C présentant une électroconductivité d'au plus 10 µS pendant 30 secondes ;
tirage vers l'extérieur dans la direction verticale à partir de la surface de l'eau jusqu'à une position à pas moins de 1 cm dans l'air en l'espace de 1 seconde ;
mesure d'une durée pendant laquelle un film d'eau uniforme formé sur la surface du séparateur est retenu en déterminant le moment auquel le film d'eau uniforme manque d'eau, c'est-à-dire
(i) le moment auquel le film d'eau est rompu, ou
(ii) le moment auquel la portion humide est divisée en deux ou plus, ou
(iii) le moment auquel la largeur de la portion humide ou la surface de la portion humide est réduite à une moitié ou moins ; et
définition de la durée comme "durée de rétention de film d'eau".
